# EUROPEAN PATENT SPECIFICATION

(11) **EP 1 072 000 B1**
(45) Date of publication and mention of the grant of the patent: **31.07.2002**
(21) Application number: 00903727.6
(22) Date of filing: 09.02.2000
(51) Int. Cl.: G06F 17/30

(54) **METHOD AND APPARATUS FOR SUPPORTING ELECTRONIC TEXT SEARCH**
VERFAHREN UND ANORDNUNG ZUR UNTERSTÜTZUNG ELEKTRONISCHER TEXT-RECHERCHEN
METHODE ET APPAREIL PRENANT EN CHARGE UNE RECHERCHE TEXTUELLE ELECTRONIQUE

(30) Priority: 12.02.1999 FI 990286
(43) Date of publication of application: 31.01.2001
(73) Proprietor: Alma Media OYJ, 00100 Helsinki (FI)
(72) Inventor: EEROLA, Tuomas, FIN-01620 Vantaa (FI); MÄKINEN, Sami, J., FIN-37200 Siuro (FI)
(74) Representative: Äkräs, Tapio Juhani
(86) International application number: FI0000091
(87) International publication number: WO0048093

(56) References cited:
- EP-A1- 0 886 227
- US-A- 5 412 807
- US-A- 5 717 912

## Description

### BACKGROUND OF THE INVENTION

The invention relates to supporting electronic text search, particularly in connection with searches directed to documents published in an Internet-type network and on CD-ROM discs.

The number of documents published in an electronic form and the amount of information they contain are increasing at an enormous rate. The Internet and CD-ROMs (and DVD discs) are becoming increasingly common means for publishing articles.

The user searches the documents for information by entering one or more words which he considers particularly relevant. Such words are called keywords. For example, a user interested in main road traffic accidents ("maantieliikenneonnettomuus" in Finnish) can use keywords such as "tie" (=road), "liikenne" (= traffic), "onnettomuus" (= accident), etc.

The program, computer and service that carry out the text search defined by the user are called the search program, search engine and search service, respectively. If the search program first received the keywords given by the user and only then started to browse all the information available, the search would become hopelessly long. A CD-ROM disc full of text would take several minutes to go through. Searching through the Internet as a whole would take several days or weeks. In addition, the search would load the Internet excessively. A search does not usually yield a sufficiently good result at the first time, therefore the search has to be repeated several times.

An attempt has been made to solve this problem by designing indexing programs and services which browse through the information available in advance and build an indexed database of the information, thus allowing searches to be made in one second, or only a few seconds. Internet search services such as Lycos, Yahoo and AltaVista are based on this technique. An example of a search program running on personal computer or in local area network is dtSearch, produced by a company with the same name. Information about all of these services is available at a WWW address (World Wide Web) WWW.name.com where "name" is to be replaced by the name of the service or company searched for.

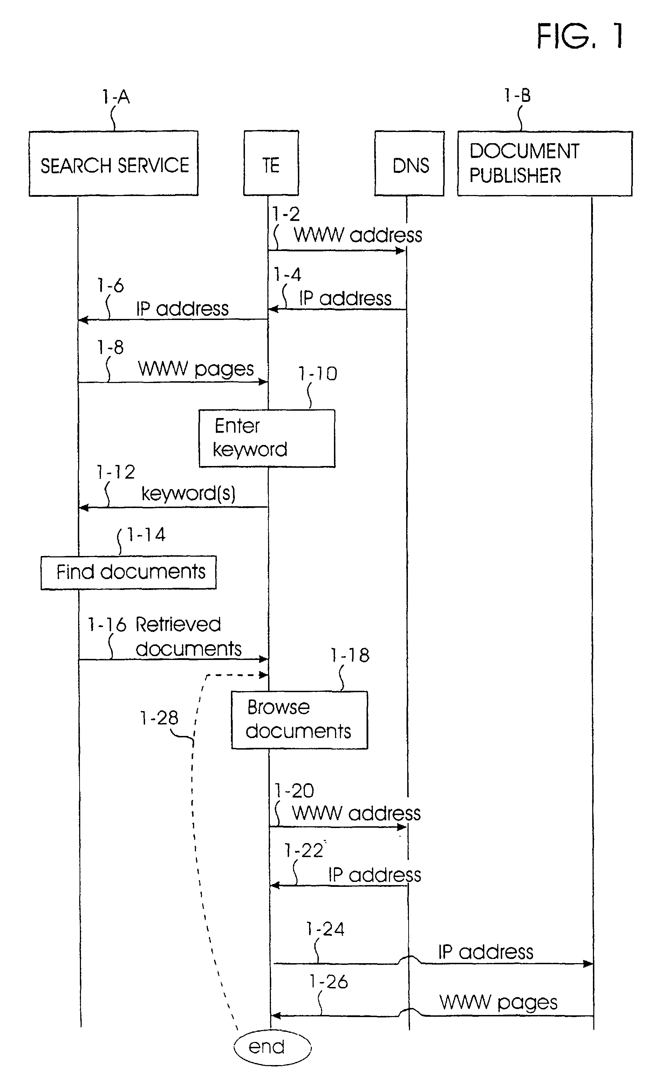

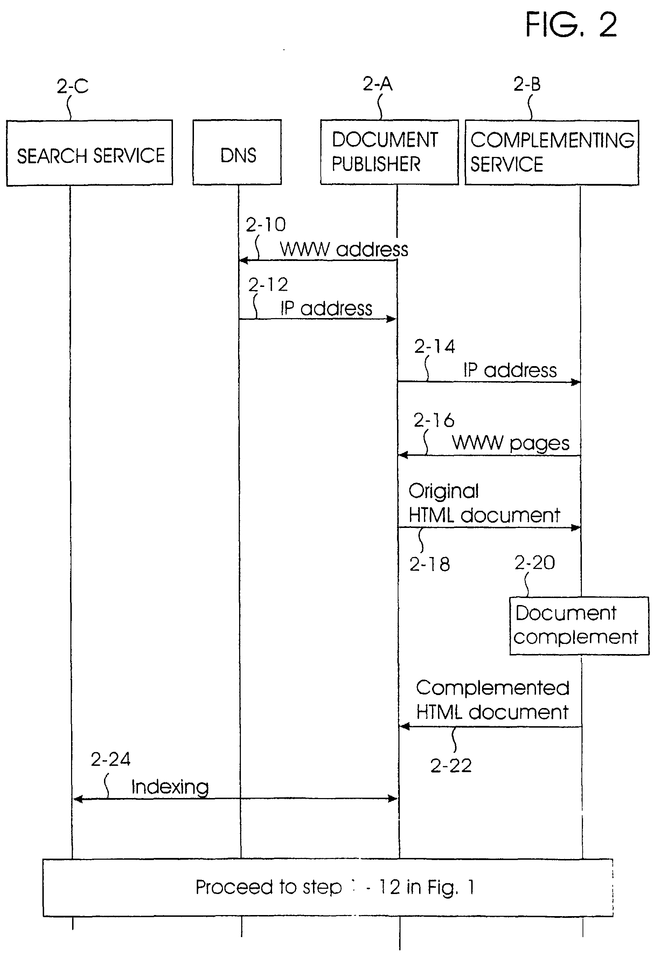

Figure 1 illustrates a search for a document in an Internet-type network. The term "Internet-type network" refers not only to the actual Internet network but also to its closed sub-networks, such as intranet, extranet, etc. Terminal Equipment TE refers to the user's terminal equipment, i.e. the user's computer and/or display terminal and the browser to be used for retrieving web pages with the terminal. Reference 1-A is used for a search server of a search service provider, Domain Name Server DNS denotes a server of a name service, i.e. a name server, and reference 1-B the WWW server that maintains Internet pages, i.e. the document publisher's server.

In step 1-2, the Internet address entered by the user in HTTP (HyperText Transfer Protocol) format is transmitted to the name server DNS, which then transmits in step 1-4 the address of the search server in an IP (Internet Protocol) format to the user. In step 1-6, the terminal equipment TE uses the IP address to create a link to the search server 1-A.

In step 1-8 the search server transfers the WWW page to the user in HTML (HyperText Markup Language) format, used as the page description language, and the WWW pages are then displayed on the display of the user's terminal equipment. The connection between the server and the terminal equipment remains open only for the time it takes to transfer the page.

In step 1-10 the user enters one or more keywords into the search form of the search engine, the keywords being then transmitted to the search server in step 1-12. In step 1-14 the search program searches the search server's database for the entered keywords. In step 1-16 the user receives a list of the documents that contain the keywords.

In step 1-18 the user can browse the retrieved documents with his Internet browser. When he wishes to study a document found in the search. he submits the WWW address of the document to the browser, for example by selecting the address from the list produced by the search service. The browser then contacts the name server in step 1-20. The name server transmits the IP address of the document in question to the browser in step 1-22, and in step 1-24 the browser uses the IP address to ask for the document. In step 1-26 the WWW page concerned is transmitted to the user. If the user wishes to browse other documents found by the search engine, he can return to the listing of the found documents in step 1-28.

The user can repeat the steps 1-18...1-28 until he has gone through all the documents found by the search engine and/or he wishes to stop the browsing.

For the above described search to be efficient, different search services employ different techniques for combining keywords. Logical operators AND, OR and NOT and parentheses are commonly used. For example, a search with words "tie AND onnettomuus" (= "road AND accident") will retrieve documents containing the words "tie" and "onnettomuus".

However, a mere combining of keywords does not usually provide relevant information. Because of this, most search services also recognise a proximity operator. In AltaVista the operator is NEAR; a search with words "tie NEAR onnettomuus" will retrieve documents where the words "tie" and "onnettomuus" are at a maximum distance of 10 words from each other. Also dtSearch allows a maximum word distance to be determined: its proximity operator w/n, where n=1, 2, ..., requires that the words appear at a maximum distance of n from each other.

The problem this invention deals with is that advance indexing does not function well in languages in which words have several inflected forms. Finnish nouns and nominal verb forms have 15 case forms, Hungarian has as many as 21. With singular and plural forms, possessive suffixes and other endings taken into account, the number of inflected forms may rise to several hundred.

To find inflected forms, all the above mentioned search services. support the use of a wild card, or an asterisk (*). The asterisk can be used to indicate that the word is not complete and that the search service is to find all words having the beginning indicated in the search. For example, with a keyword "onnettomuu*" ("acciden*"), the search service should find "onnettomuudet" (= accidents), "onnettomuuksista" (= about accidents), "onnettomuustutkintalautakunta" (= accident investigation commission), etc.

The use of the asterisk involves, however, some problems and restrictions. AltaVista, for example, requires that the asterisk is preceded by at least three letters of the keyword. But for example with the Finnish word "tie" (= road), a vowel change occurs as soon as the word is inflected: "teiden" (= of the roads), "teillä" (= on the roads), etc. Another problem is that the keyword "tie" produces all words with the letters "tie" at the beginning, such as "tiede" (= science), "tietokone" (= computer), "tietoliikenne" (= telecommunications), "tietysti" (= of course), "tienoo" (= region) and "tietoisuus" (= awareness), together with all their forms of inflection. In other words, searches with words having short stems produce highly irrelevant information, or no information at all.

For example, US patent 5412807 to Bruce Moreland discloses an index-based text retrieval system. Moreland's technique supports locating user-selected text portions in an indexed tree structure. A problem with Moreland's technique is that the user-selected text portions must be known prior to indexing, which clearly is a handicap for many information-retrieval systems.

### BRIEF DESCRIPTION OF THE INVENTION

It is an object of the invention to provide an electronic document structure where the above problems do not appear after a document has been indexed. From another point of view, an object of the invention is to provide a method and equipment for producing such documents. The objects of the invention are achieved with a method and system characterized by what is stated in the independent claims. The preferred embodiments of the invention are disclosed in the dependent claims.

The basic idea of the invention is that an electronically published document is complemented by adding into it the words appearing in the text part, given in their basic form and in their original order. Words added in the basic form allow the search service to find the document complemented according to the invention after it has been indexed, although a word in its basic form would not appear in the original document at all.

In the following the term "complementary part" is used to refer to the part that contains the words added in accordance with the invention. Correspondingly, the term "basic part" is used for the part containing the original document.

In fact, it is known to manually add into documents keywords in their basic form. In scientific documents. a keyword field showing some keywords is sometimes used either after the title of the document or at the end of it. This does not, however, offer the kind of solution that is desired because the number of words given in their basic form is very limited, and the proximity operator does not function properly. A long article possibly discusses several fully separate topics, and yet the corresponding keywords given in the keyword field may be close to each other.

The method of the invention where the words are added in their original order makes it possible for the search service to use the proximity operators correctly. For example a search with words "tie NEAR onnettomuus" would produce a document containing a section of text such as "teillämme tapahtuneet onnettomuudet (=accidents that have occurred on the roads), even if the document did not contain the words "tie" (= road) or "accident" (= onnettomuus) in their basic form at all.

The adding of the words in their original order into the text part of the document would seem to approximately double the length of the document. This is true for documents that contain only text. However. most documents also include images which require many times more memory space compared with documents that contain only text. Therefore, the doubling of the text part does not significantly increase the size of the memory space needed by the document as a whole.

The minor increase caused to the memory space is balanced by yet another, surprising advantage provided by the method of the invention: since the documents thus complemented contain double the number of keywords chosen by the user, the relevance of the documents is seemingly at least doubled. In other words, the publisher of a document complemented according to the invention will get his message through better. The relevance of the document doubles with regard to words that have a stem which is long enough to allow a reliable search to be made using the asterisk. for example "onnettomuu*". With regard to words with short stems, the relevance of the document increases manifold because in the prior art such words cannot be searched for at all and therefore these documents are not at all relevant to the search service applying the prior art. (Or, they can be partly relevant in case the user enters several keywords some of which the search service can find). The term "relevance" in this context does not refer to how relevant a document is to the user if he should find it, but to a parameter produced by the search service based on counting how many of the entered keywords appear in the document, and possibly on the frequency of their appearance.

The users of a document (i.e. persons searching for the document) cannot know in advance which documents are complemented applying the method of the invention and which are not. This is another reason why it is most significant that the words are added in their original order because then the users do not need to change the way they are used to make searches, but they can continue to use the proximity operator as before.

However, for the user, the search process does not yet come to an end when the search service finds a document that contains the keywords. Usually the user then needs to find the relevant portions within the document.

Let us start by assuming that the documents are complemented simply by adding words in their basic form to the end of the document. The user can search this complementary part for basic forms of keywords by means of the "Find" functionality of the browser or the word processor. If the keyword is a word with a short stem, the user cannot search for it in the basic part of the document. but he can check the complementary part to find a longer and less common word closely related to the keyword and then find that in the basic part of the document. In this respect the method of the invention may slightly change the manner in which the user works, but the user will notice this only after the search program has already found the document and the user is browsing it. If the document is short or if the user for some reason wants to read it through, he does not need to change his ways of working.

Document words added to the end of the document in their basic form distort the outer appearance of the document. The text looks as if it were written by somebody who does not understand anything about language but only mechanically translates words with the help of a dictionary. The writer of the document might even consider this as an infringement of the right of respect. (The right of respect means that despite the commercial distribution right, a piece of work may not be presented in an offensive manner). The complementary part is therefore preferably included in the document so that it cannot be seen during normal use of the document. For example, an HTML-coded (HyperText Markup Language) document can be provided with at least one comment or metacode field containing a complementary part of the invention. Another alternative is to load one or more images onto the complementary part. When the user wishes to search for a word in the complementary part, he opens the document with his browser program and displays the HTML commands included in the document. In Internet Explorer, for example, the command View/Source is used for this purpose. In advanced text processors, in turn, it is possible to give the complementary part an attribute "hidden text", whereby the complementary part can be displayed by displaying the control and special characters that are normally invisible.

Prior art search methods do not find keywords that appear as parts of compounds somewhere else than at the beginning of a word. The proximity operator does not work either if the keywords appear as parts of a compound. For example, from the word "maantieliikenteen" (= of main road traffic), the words "tie" or "liikenne" cannot be found, particularly when the words are close to each other. In a second preferred embodiment, the complementary part of the invention therefore comprises for each compound the basic form of the compound and also its parts, given as separate words in their basic form. For example, for an inflected compound such as "maantieliikenneonnettomuuksien" (= of main road traffic accidents). the complementary part would include the words "maantieliikenneonnettomuus" (= main road traffic accident) "maa" (for main), "tie" (= road), "liikenne" (= traffic) and "accident" (= onnettomuus). The document thus complemented will be found when the user enters the keywords "tie" and "liikenne", even when the user requires the words to appear close to each other.

According to yet another preferred embodiment, the complementary part of the invention comprises, in addition to the compound given in its basic form and the parts of the compound, all combinations of the parts of the compound where all parts of the compound except the last one are in the form they appear in the document, the last part of the compound being given in its basic form. Furthermore, the combinations of the parts of the compound are given in their original order, i.e. the words "maantie" (= main road), "tieliikenne" (= road traffic) and "liikenneonnettomuus" (= traffic accident) in the above example.

According to yet another preferred embodiment, the complementary part of the invention is added at a centralized server so that each document publisher would not need to acquire software capable of converting words into their basic form. The original document to be complemented can be transmitted on a disc, as an e-mail attachment, by using Internet FTP protocol, etc.

### BRIEF DESCRIPTION OF THE DRAWINGS

In the following the invention will be described in greater detail in connection with preferred embodiments and with reference to the accompanying drawings, in which
Figure 1 is a combined flow and signaling diagram showing a search for a document published in an Internet-type network;
Figure 2 is a signaling diagram illustrating the adding of a complementary part of the invention;
Figure 3A illustrates the structures of a pre-processed document and a complemented document;
Figure 3B illustrates a structure of a complemented document where an image has been loaded onto the complementary part.

### DETAILED DESCRIPTION OF THE INVENTION

A method that can be used for adding a complementary part of the invention to a document is shown in Figure 2 where reference 2-A denotes a server of a document publisher. DNS denotes a name server, reference 2-B denotes the above mentioned centralized server, i.e. the server of the complementing service provider, and reference 2-C denotes the server of the search service provider.

Document provider refers to the party that wishes to publish a document complemented in accordance with the invention. Provider of the complementing service, in turn, provides the service of the invention for adding a complementary part to the document.

In step 2-10 the document publisher sends the WWW address of the complementing service provider's server to the name server DNS which returns the corresponding IP address to the document publisher in step 2-12. This provides the document publisher with access to the Internet pages of the complementing service provider in step 2-14. In step 2-16 the publisher uses his browser program to retrieve the complementing service provider's WWW page/s to his terminal.

The WWW page concerned can be used at least for displaying an electronic mail address to which the document publisher can send the document to be complemented in accordance with the invention. On the pages the complementing service provider can for example provide information about the service offered and instructions on how to use it.

After having received the electronic mail address, the document publisher can send the document in step 2-18 to the service provider for modification as an electronic mail attachment, for example.

Another possibility to transmit the document is to use an FTP (File Transfer Protocol) transmission. The method of transmission of the document is, however, not relevant to the invention.

In step 2-20 the document publisher's document provided in an HTML format is modified on the complementing service provider's server by adding a complementary part of the invention thereto. The complemented document is then returned to the document publisher in step 2-22, either by electronic mail or using FTP. After the search service has indexed the document in step 2-24, the document user can search for the document by entering also words in their basic form and, if compounds are divided into parts, also by entering the basic forms of the parts. A search for a document published in an Internet-type network is described in Figure 1 starting from step 1-12.

The search server can be configured in such a way that the words included in the complementary part in their basic form can be given extra weight, i.e. relevance points, than in the prior art. Documents containing words with higher relevance points are then placed closer to the top of the list displaying the search results than documents containing words with lower relevance points. If the words given in their basic form in the complementary part do not receive any relevance points at all, or if the words are not indexed, the document cannot be found on the basis of the complementary part.

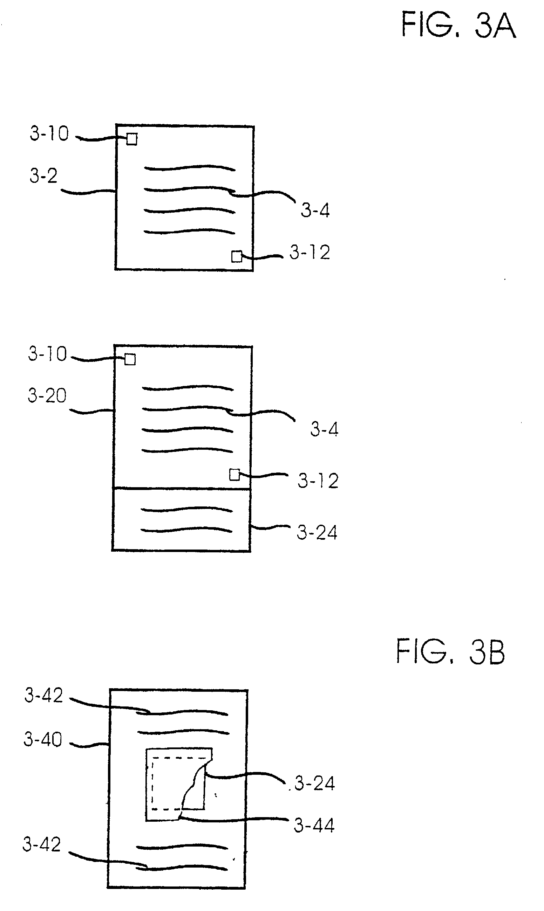

Figure 3A illustrates structures of a pre-processed document 3-2 and a complemented document 3-20. The original document can be, for example, a text page including editing and written with a word processor. The pre-processed document can be for example the original document modified into HTML. The documents can also include images, tables, frames and/or other objects available for downloading from Internet pages. Reference 3-10 denotes a start tag <HTML> and reference 3-12 an end tag </HTML> used in the HTML language. The tags surround document content 3-4.

The document 3-20 complemented according to the invention also contains the start tag 3-10. the end tag 3-12 and the document content 3-4. In addition, the complemented document 3-20 is provided with a complementary part 3-24 comprising all the words appearing in the document, given in their basic form and in their original order. The complementary part can be coded for example into a Metakeyword or an HTML comment. An HTML file can comprise several HTML comments. A comment in an HTML file is indicated by "<! ..." and "...>". The place of the comment in the file is not essential; the comment can be at the beginning of the document (3-20), at the end of it. or in the middle. Instead of these methods, or in addition to them, one or more images can be loaded onto the complementary part 3-24. Figure 3B shows a structure of a complemented document 3-40. When the complementary part 3-24 is under an image 3-44, the complementary part is not displayed during normal use of the document, but only the pre-processed document 3-42 is displayed.

In addition to words given in their basic form, the complementary part of the document can also contain different variations, synonyms and related meanings of the words. This further increases the relevance of the document because the document can be searched for using keywords which do not appear in the original document

It is apparent to a person skilled in the art that as technology advances, the basic idea of the invention can be implemented in various ways. The invention and its embodiments are therefore not restricted to the above described examples but they may vary within the scope of the claims.

## Claims

1. A method for supporting electronic text search of a document (3-20, 3-40) to be published in an electronic form, the document comprising at least a text part, in which method
the document (3-20, 3-40) is subjected to at least one computerized indexing (2-24) to enhance real-time search of the document (3-20, 3-40), and
the result of the indexing is stored,
**characterized in that** before the at least one computerized indexing (2-24), the document (3-20, 3-40) is complemented by adding (2-20) a complementary part (3-24) thereto, the complementary part comprising at least the words included in a substantial part of the text part of the document (3-20, 3-40), said words being given in their basic form and in their original order.

2. A method according to claim 1, **characterized in that** the complementary part (3-24) is added to the document (3-20, 3-40) in a way which prevents the complementary part from being shown during normal use of the document.

3. A method according to claim 1, **characterized in that** for each compound word, the complementary part (3-24) comprises not only the basic form of the compound word but also basic forms of the parts of the compound word given as separate words.

4. A method according to claim 3, **characterized in that** the complementary part (3-24) further comprises all combinations of the parts of a compound word where the parts of said compound word are in their original order.

5. A method according to claim 1, **characterized in that** a plural number of documents are published using a plural number of publishing servers and that the complementary part (3-24) is added at a complementing server (2-B) which is common to the plural number of publishing servers.

6. A method according to claim 5, **characterized in that** the complementing server (2-B) receives (2-18) and transmits (2-22) the documents to be complemented (3-20, 3-40) via a telecommunication network employing an IP protocol.

7. An apparatus (2-B), the equipment (2-B) being arranged to receive a document (3-20, 3-40) to be published the document comprising at least a text part, the document (3-20, 3-40) being subjected to at least one computerized indexing (2-24) to enhance real-time search of the document (3-20, 3-40), **characterized in that**, the apparatus (2-B) is arranged to, before the at least one computerized indexing (2-24), add a complementary part (3-24) to the document, the complementary part comprising at least the words included in a substantial part of the text part of the document (3-20, 3-40), the words being given in their basic form and in their original order.

8. An apparatus (2-B) according to claim 7, **characterized in that** the apparatus (2-B) is arranged to receive (2-18) and to transmit (2-22) the document (3-20, 3-40) via a telecommunication network applying an IP protocol.

9. An apparatus according to claim 7 or 8, **characterized by** publishing means for publishing documents via a telecommunication network applying an IP protocol, the publishing means comprising at least one publishing server (1-B, 2-A) for publishing the documents, at least one indexing server (1-A, 2-C) for indexing the documents, and at least one terminal equipment (TE) for transmitting an inquiry to the at least one indexing server (1-A, 2-C).

10. A document (3-20, 3-40) in an electronic form, the document comprising at least a text part, the document (3-20, 3-40) being subjected to at least one computerized indexing (2-24) to enhance real-time search of the document (3-20, 3-40), **characterized in that** the document (3-20, 3-40) comprises a complementary part (3-24) having been added before the at least one computerized indexing (2-24), the complementary part comprising at least the words appearing in a substantial part of the text part of the document (3-20, 3-40), the words being given in their basic form and in their original order.

## Patentansprüche

1. Verfahren zur Unterstützung einer elektronischen Textsuche eines in elektronischer Form zu veröffentlichenden Dokuments (3-20, 3-40), wobei das Dokument mindestens einen Textteil umfasst, wobei bei dem Verfahren
das Dokument (3-20, 3-40) mindestens einer rechnergestützten Indizierung (2-24) unterworfen wird, um die Echtzeitsuche des Dokuments (3-20, 3-40) zu verbessern, und
das Ergebnis der Indizierung gespeichert wird,
**dadurch gekennzeichnet, dass** vor der mindestens einen rechnergestützten Indizierung (2-24) das Dokument (3-20, 3-40) durch Hinzufügen (2-20) eines komplementären Teils (3-24) dazu komplementiert wird, wobei der komplementäre Teil mindestens die Wörter umfasst, die in einem wesentlichen Teil des Textteils des Dokuments (3-20, 3-40) enthalten sind, wobei die Wörter in ihrer Grundform und in ihrer ursprünglichen Reihenfolge aufgeführt werden.

2. Verfahren gemäß Anspruch 1, **dadurch gekennzeichnet, dass** der komplementäre Teil (3-24) zu dem Dokument (3-20, 3-40) auf eine Art und Weise hinzugefügt wird, was verhindert, dass der komplementäre Teil während des normalen Gebrauchs des Dokuments gezeigt wird.

3. Verfahren gemäß Anspruch 1, **dadurch gekennzeichnet, dass** für jedes zusammengesetzte Wort der komplementäre Teil (3-24) nicht nur die Grundform des zusammengesetzten Worts sondern auch Grundformen der Teile des zusarnmengesetzten Worts umfasst, die als getrennte Worte aufgeführt werden.

4. Verfahren gemäß Anspruch 3, **dadurch gekennzeichnet, dass** der komplementäre Teil (3-24) ferner alle Kombinationen der Teile eines zusammengesetzten Wortes umfasst, wobei die Teile des zusammengesetzten Worts in ihrer ursprünglichen Reihenfolge sind.

5. Verfahren gemäß Anspruch 1, **dadurch gekennzeichnet, dass** eine Mehrzahl von Dokumenten unter Verwendung einer Mehrzahl von Veröffentlichungs-Servern veröffentlicht werden, und dass der komplementäre Teil (3-24) bei einem Komplementierungs-Server (2-B) hinzugefügt wird, der der Mehrzahl von Veröffentlichungs-Servern gemeinsam ist.

6. Verfahren gemäß Anspruch 5, **dadurch gekennzeichnet, dass** der Komplementierungs-Server (2-B) die zu komplementierenden Dokumente (3-20, 3-40) über ein Telekommunikations-Netzwerk empfängt (2-18) und sendet (2-22), das ein IP-Protokoll benutzt.

7. Vorrichtung (2-B), wobei das Gerät (2-B) angeordnet ist, um ein zu veröffentlichendes Dokument (3-20, 3-40) zu empfangen, wobei das Dokument mindestens einen Textteil umfasst, wobei das Dokument (3-20, 3-40) mindestens einer rechnergestützten Indizierung (2-24) unterworfen wird, um die Echtzeitsuche des Dokuments (3-20, 3-40) zu verbessern, **dadurch gekennzeichnet, dass** die Vorrichtung (2-B) angeordnet ist, um vor der mindestens einen rechnergestützten Indizierung (2-24) einen komplementären Teil (3-24) zu dem Dokument hinzuzufügen, wobei der komplementäre Teil mindestens die Wörter umfasst, die in einem wesentlichen Teil des Textteils des Dokuments (3-20, 3-40) enthalten sind, wobei die Wörter in ihrer Grundform und in ihrer ursprünglichen Reihenfolge aufgeführt werden.

8. Vorrichtung (2-B) gemäß Anspruch 7, **dadurch gekennzeichnet, dass** die Vorrichtung (2-B) angeordnet ist, um das Dokument (3-20, 3-40) über ein Telekommunikations-Netzwerk zu empfangen (2-18) und zu senden (2-22), das ein IP-Protokoll anwendet.

9. Vorrichtung gemäß Anspruch 7 oder 8, **gekennzeichnet durch** Veröffentlichungsmittel zum Veröffentlichen von Dokumenten über ein Telekommunikations-Netzwerk, das ein IP-Protokoll anwendet, wobei das Veröffentlichungsmittel mindestens einen Veröffentlichungs-Server (1-B, 2-A) zum Veröffentlichen der Dokumente, mindestens einen Indizierungs-Server (1-A, 2-C) zur Indizierung der Dokumente und mindestens ein Terminalgerät (TE) zum Senden einer Anforderung an den mindestens einen Indizierungs-Server (1-A, 2-C) umfasst.

10. Dokument (3-20, 3-40) in einer elektronischen Form, wobei das Dokument mindestens einen Textteil umfasst, wobei das Dokument (3-20, 3-40) mindestens einer rechnergestützten Indizierung (2-24) unterworfen wird, um die Echtzeitsuche des Dokuments (3-20, 3-40) zu verbessern, **dadurch gekennzeichnet, dass** das Dokument (3-20, 3-40) einen komplementären Teil (3-24) umfasst, der vor der mindestens einen rechnergestützten Indizierung (2-24) hinzugefügt wurde, wobei der komplementäre Teil mindestens die Wörter umfasst, die in einem wesentlichen Teil des Textteils des Dokuments (3-20, 3-40) erscheinen, wobei die Wörter in ihrer Grundform und in ihrer ursprünglichen Reihenfolge aufgeführt werden.

## Revendications

1. Procédé pour prendre en charge une recherche textuelle électronique d'un document (3-20, 3-40) destiné à être publié sous une forme électronique, le document comportant au moins une partie textuelle, procédé dans lequel
le document (3-20, 3-40) est soumis à au moins une indexation informatisée (2-24) pour améliorer la recherche en temps réel du document (3-20, 3-40), et
le résultat de l'indexation est mémorisé,
**caractérisé en ce que**, avant la au moins une indexation informatisée (2-24), le document (3-20, 3-40) est complété par l'ajout (2-20) à celui-ci d'une partie complémentaire (3-24), la partie complémentaire comportant au moins les mots inclus dans une partie essentielle de la partie textuelle du document (3-20, 3-40), lesdits mots étant attribués dans leur forme de base et dans leur ordre d'origine.

2. Procédé selon la revendication 1, **caractérisé en ce que** la partie complémentaire (3-24) est ajoutée au document (3-20, 3-40) d'une manière qui évite de montrer la partie complémentaire pendant l'utilisation normale du document.

3. Procédé selon la revendication 1, **caractérisé en ce que** pour chaque mot composant, la partie complémentaire (3-24) comporte non seulement la forme de base du mot composant mais également les formes de base des parties du mot composant attribuées en tant que mots séparés.

4. Procédé selon la revendication 3, **caractérisé en ce que** la partie complémentaire (3-24) comporte en outre toutes les combinaisons des parties d'un mot composant où les parties dudit mot composant sont dans leur ordre d'origine.

5. Procédé selon la revendication 1, **caractérisé en ce qu'**une pluralité de documents sont publiés en utilisant une pluralité de serveurs de publication et **en ce que** la partie complémentaire (3-24) est ajoutée dans un serveur de complément (2-B) qui est commun à la pluralité de serveurs de publication.

6. Procédé selon la revendication 5, **caractérisé en ce que** le serveur de complément (2-B) reçoit (2-18) et transmet (2-22) les documents à compléter (3-20, 3-40) via un réseau de télécommunications utilisant un protocole IP.

7. Dispositif (2-B) pour prendre en charge une recherche textuelle électronique, le dispositif (2-B) étant conçu pour recevoir un document (3-20, 3-40) destiné à être publié sous une forme électronique, le document comportant au moins une partie textuelle, le document (3-20, 3-40) étant soumis à au moins une indexation informatisée (2-24) pour améliorer la recherche en temps réel du document (3-20, 3-40), **caractérisé en ce que** le dispositif (2-B) est conçu pour, avant la au moins une indexation informatisée (2-24), ajouter une partie complémentaire (3-24) au document, la partie complémentaire comportant au moins les mots inclus dans une partie essentielle de la partie textuelle du document (3-20, 3-40), les mots étant attribués dans leur forme de base et leur ordre d'origine.

8. Dispositif (2-B) selon la revendication 7, **caractérisé en ce que** le dispositif (2-B) est conçu pour recevoir (2-18) et transmettre (2-22) le document (3-20, 3-40) via un réseau de télécommunications appliquant un protocole IP.

9. Dispositif selon la revendication 7 ou 8, **caractérisé par** des moyens de publication destinés à publier des documents via un réseau de télécommunications appliquant un protocole IP, les moyens de publication comportant au moins un serveur de publication (1-B, 2-A) pour publier les documents, au moins un serveur d'indexation (1-A, 2-C) pour indexer les documents, et au moins un équipement terminal (TE) pour transmettre une interrogation au au moins un serveur d'indexation (1-A, 2-C).

10. Document (3-20, 3-40) destiné à être publié sous une forme électronique, le document comportant au moins une partie textuelle, le document (3-20, 3-40) étant soumis à au moins une indexation informatisée (2-24) pour améliorer la recherche en temps réel du document (3-20, 3-40), **caractérisé en ce que** le document (3-20, 3-40) comporte une partie complémentaire (3-24) ayant été ajoutée avant la au moins une indexation informatisée (2-24), la partie complémentaire comportant au moins les mots apparaissant dans une partie essentielle de la partie textuelle du document (3-20, 3-40), les mots étant attribués dans leur forme de base et dans leur ordre d'origine.
